# EUROPÄISCHE PATENTANMELDUNG

(11) **EP 2 221 696 A1**
(43) Veröffentlichungstag der Anmeldung: **25.08.2010**
(21) Anmeldenummer: 09152650.9
(22) Anmeldetag: 12.02.2009
(51) Int. Cl.: G05B 19/418, G06F 11/36

(54) **Verfahren und Vorrichtung zum Überprüfen eines Steuerprogramms einer Industrieanlage**

(71) Anmelder: Siemens Aktiengesellschaft, 80333 München (DE)
(72) Erfinder: Jahn, Roland, 76199, Karlsruhe (DE)

(57) **Zusammenfassung**

Industrieanlagen (2) verfügen über komplexe Prozessleitsysteme mit vielen Freiheitsgraden zur Parametrierung. Um Fehler bei der Parametrierung zu finden, schlägt die Erfindung ein Verfahren zum Überprüfen eines Steuerprogramms (12) zur Steuerung einer Industrieanlage (2) vor, bei dem Daten des Steuerprogramms (12) in eine Datenbank (20) eingelesen werden und eine Prüfroutine (24) das Steuerprogramm (12) anhand der Daten auf die Einhaltung festgelegter Regeln überprüft und Regelbrüche ausgibt.

## Beschreibung

Die Erfindung betrifft ein Verfahren zum Überprüfen eines Steuerprogramms zur Steuerung einer Industrieanlage.

Industrieanlagen, wie Kraftwerke oder industrielle Fertigungsanlagen, verfügen über komplexe Prozessleitsysteme, die die einzelnen Anlagenelemente der Industrieanlage und deren Zusammenspiel während des Betriebs der Industrieanlage steuern. Ein solches Prozessleitsystem gibt einem Betreiber oder Bediener der Industrieanlage große Freiheitsgrade beim Konfigurieren und Parametrieren des Prozessleitsystems zum Erfüllen der projektspezifischen Aufgabenstellung.

Parallel zu diesen Freiheitsgraden steigt die Möglichkeit, durch eine falsche Programmierung einzelner Anlagenelemente oder deren Zusammenspiel ungewollte Steuerungsabläufe zu erzeugen, so dass die Gewährleistung eines fehlerfreien Betriebs der Industrieanlage infrage gestellt ist. Um Programmierfehler in einem Prozessleitsystem zu finden, werden im Rahmen von Anlagentests oder während der Inbetriebnahme einer Industrieanlage viele mögliche Zustände der Industrieanlage durchlaufen und Fehler werden durch manuelle Suche entdeckt und anschließend beseitigt.

Es ist eine Aufgabe der Erfindung, ein Verfahren zum Überprüfen eines Steuerprogramms zur Steuerung einer Industrieanlage anzugeben, mit dem Programmierfehler im Steuerprogramm zuverlässig gefunden werden können.

Diese Aufgabe wird durch ein Verfahren der eingangs genannten Art gelöst, bei dem erfindungsgemäß Daten des Steuerprogramms in eine Datenbank eingelesen werden und eine Prüfroutine das Steuerprogramm anhand der Daten auf die Einhaltung festgelegter Regeln überprüft und Regelbrüche ausgibt. Es können Programmierfehler entdeckt werden, die durch Anlagentests nicht ohne weiteres gefunden werden können, z. B. wenn sie nur in einem sehr speziellen Parameterzusammenspiel auftreten. Die Steuerung der Industrieanlage kann verbessert und der Betrieb zuverlässiger durchgeführt werden.

Eine Industrieanlage kann jede Anlage sein, in der ein industrieller Prozess elektronisch gesteuert wird. Das Steuerprogramm kann ein Prozessleitsystem zur Steuerung einiger oder aller Prozesse eines Teils oder der gesamten Industrieanlage sein. Es kann eine Mehrzahl von Unterprogrammen umfassen, die nebeneinander- oder zusammenwirken können. Das Einlesen der Daten des Steuerprogramms in die Datenbank kann mit Hilfe einer Einleseroutine der Prüfvorrichtung erfolgen. Die Datenbank kann ein Teil eines Datenbankmanagementsystems zur Verwaltung von Daten in einer oder mehreren Datenbanken sein. Die Prüfroutine kann ein Computerprogramm oder ein Teil eines Computerprogramms sein, in dem die festgelegten Regeln hinterlegt sein können.

Die Ausgabe von Regelbrüchen kann in Form einer oder mehrerer Listen erfolgen, die zweckmäßigerweise visualisiert werden, also auf einem Bildschirm ausgegeben oder ausgedruckt werden können. Die Überprüfung kann dadurch erfolgen, dass die Prüfroutine ausgesuchte Steuerungsabläufe des Steuerprogramms anhand einer Checkliste auf die Einhaltung der festgelegten Regeln überprüft. Das Aussuchen der Steuerungsabläufe kann durch einen Bediener erfolgen, der einzelne Steuerungsabläufe oder eine Kategorie von Steuerungsabläufen zur Überprüfung auswählt. Steuerungsabläufe können Verschaltungen zwischen Anlagenelementen und/oder ein Zusammenspiel von Anlagenelementen sein. Ein Anlagenelement kann ein Bauelement der Industrieanlage sein, wie ein Sensor, ein Ventil oder ein Motor, oder ein Anlagenelement in Form einer Softwareeinheit, z.B. ein Baugruppentreiber, die auf ein Bauelement, also Hardware, bezogen sein kann und auch im Bauelement hinterlegt sein kann. Die Checkliste kann einzelne Parameter der Prüfung beinhalten, beispielsweise Grenzwerte, Schrittketten, spezielle Verschaltungen und dergleichen. Die Checklisten werden zweckmäßigerweise nach festgelegten und durch einen Bediener der Prüfvorrichtung auswählbaren Prüfkriterien erstellt.

Um eine Reihe unterschiedlicher Steuerprogramme von unterschiedlichen Industrieanlagen überprüfen zu können, ist es vorteilhaft, das Verfahren zum Überprüfen mittels einer von der Industrieanlage unabhängigen Prüfvorrichtung durchzuführen. Hierbei werden die Daten vorteilhafterweise von z.B. einem Steuerserver der Industrieanlage in die Prüfvorrichtung, die die Prüfroutine enthält, eingelesen. Die Prüfvorrichtung kann nun das Steuerprogramm oder Teile daraus mit Hilfe der Prüfroutine prüfen und Regelbrüche ausgeben, ohne hierbei von einem Betrieb der Industrieanlage abhängig zu sein oder einen Betrieb des Steuerservers, z.B. dessen Leistung, zu beeinflussen.

In einer vorteilhaften Ausführungsform der Erfindung prüft die Prüfroutine das Steuerprogramm auf korrekte Parametrierung und Verschaltung von Anlagenelementen der Industrieanlage. Ein Parameter kann ein veränderliches Element eines Unterprogramms sein, das bei einem Aufruf des Unterprogramms für jeweils diesen einen Aufruf auf einen konkreten Wert gesetzt wird. Ein Parameter kann auch ein Argument sein, das einem Unterprogramm des Steuerprogramms übergeben wird. Ebenfalls möglich ist ein Schalter, der Abläufe im Unterprogramm steuert.

Vorteilhafterweise sind die Regeln Plausibilitätsregeln und Regelbrüche Unplausibilitäten. Hierdurch sind programmspezifische Prüfungen nicht erfasst und die Prüfroutine kann universell eingesetzt werden.

Mit weiterem Vorteil prüft die Prüfroutine, ob zu Anlagenelementen gesetzte Werte hinsichtlich Anlagenelementdaten plausibel sind. So können Grenzwerte zu einem Anlagenelement, die außerhalb eines Ausgabewertbereichs des Anlagenelements liegen, und somit nie überschritten oder unterschritten werden können, aufgespürt werden. Dient ein Grenzwert zum Auslösen eines Steuervorgangs, so kann dieser Steuervorgang nie ausgelöst werden. Es kann auch geprüft werden, ob ein Ausgangswertebereich eines Anlagenelements einen entsprechend verschalteten Eingangswertbereich eines anderen Anlagenelements über- oder unterschreitet, sodass gegebenenfalls Vorgänge nicht erkannt werden können.

Zweckmäßigerweise überprüft die Prüfroutine mehrere gleiche Signal gebende Anlagenelemente der Industrieanlage darauf hin, ob sie hinsichtlich einer festgelegten Eigenschaft ausreichend voneinander getrennt sind. Auf diese Weise kann eine Verschaltung von mehreren Anlagenelementen, auch über Systemgrenzen bzw. Grenzen von Funktionsbereichen hinweg, überprüft werden. Die Eigenschaft kann eine Eigenschaft der Industrieanlage sein, z.B. die Unabhängigkeit einer Energieversorgung der gleichen Anlagenelemente oder ihrer Verbindung mit voneinander unabhängigen Signalgebern. Sind beispielsweise zwei oder mehrere aus Sicherheitsgründen redundant vorhandene Anlagenelemente auf einer Platine angeordnet, so führt eine Unterbrechung der Spannungsversorgung von dieser Platine zu einem Ausfall aller Anlagenelemente und somit zu einer geringen Sicherheit gegen Störungen. Werden andererseits drei Auswerteelemente von nur einem Sensor mit ihrem Eingangssignal versorgt, so führt der Ausfall dieses einen Sensors zum Ausfall aller drei Auswerteelemente. Die gleichen Signal gebenden Anlagenelemente sind zweckmäßigerweise Elemente, die ihr Signal an einen gemeinsamen Signalempfänger geben.

Des Weiteren kann überprüft werden, ob aktivierbare Grenzwerte tatsächlich aktiviert sind, insbesondere alle aktivierbaren Grenzwerte des Steuerprogramms oder eines Teils des Steuerprogramms, beispielsweise eines Funktionsbereichs. Wurde beim Erstellen des Steuerprogramms das Aktivieren eines Grenzwerts vergessen, so kann dies erkannt werden.

Allerdings kann es vorkommen, dass manche nicht notwendigen Grenzwerte hardware- oder softwaretechnisch nicht deaktivierbar sind oder durch die Geschichte eines Programmierens Grenzwerte entstanden sind, die für den Betrieb der Industrieanlage nicht notwendig sind. Um nicht zu viele unnötige Grenzwerte zu überprüfen ist es vorteilhaft, wenn die Prüfroutine Anlagenelemente daraufhin überprüft, ob Grenzwerte zu Signalausgängen von Anlagenelementen der Industrieanlage, die mit einem Signaleingang eines anderen Anlagenelements der Industrieanlage verbunden sind, aktiviert sind.

Weiter kann die Anzahl von zu überprüfenden Grenzwerten reduziert werden, wenn die Prüfroutine Grenzwerte zu Signalausgängen von Anlagenelementen, die von einem voreingestellten Wert auf einen anderen Wert gesetzt wurden, daraufhin überprüft, ob die Grenzwerte aktiviert sind. Das Verstellen eines Grenzwerts von einem voreingestellten Wert bzw. Defaultwert weist darauf hin, dass dieser Grenzwert zu einer Verwendung bestimmt ist. Daher ist das Überprüfen der Aktivierung dieses Grenzwerts besonders sinnvoll.

Außerdem wird vorgeschlagen, dass die Prüfroutine dokumentarisch hinterlegte Angaben zu Ausgabesignalen von Anlagenelementen mit Grenzwerten, die diesen Ausgabesignalen zugeordnet sind, vergleicht. So kann es durch eine flüchtig fehlerhafte Programmierung vorkommen, dass zu einem Anlagenelement beschrieben ist, dass dieses bei einem bestimmten Wert eines physikalischen Parameters aktiviert werden, schalten oder einen Vorgang durchführen soll. Ein entsprechender Grenzwert zum Aktivieren dieses Vorgangs ist jedoch auf einen anderen Wert gesetzt. Durch das Vergleichen der hinterlegten Angaben mit den Grenzwerten kann ein solcher Fehler leicht gefunden werden.

Ein Betriebsfehler während eines Betriebs der Industrieanlage wird üblicherweise einem Bediener bzw. einer Leitstelle der Industrieanlage gemeldet. Der Bediener überprüft daraufhin die Schwere des Fehlers, indem er anhand von Bedienbildern herauszufinden sucht, welches Anlagenelement oder welcher Vorgang gestört ist. Fehlt zu einer Fehlermeldung ein entsprechendes Bedienbild so kann der Bediener unter Umständen den Fehler nicht lokalisieren und er ignoriert den Fehler. Um dies zu vermeiden ist es vorteilhaft, wenn Fehlermeldungen zu Betriebsfehlern der Industrieanlage, beispielsweise eines Anlagenelements oder eines Vorgangs, die vom Steuerprogramm zur Ausgabe an einen Bediener vorgesehen sind, daraufhin überprüft werden, ob im Steuerprogramm zu den Fehlermeldungen, insbesondere jeder möglichen Fehlermeldung, ein Bedienbild zur Visualisierung einer Lokalisierung des Fehlers bzw. des betroffenen Anlagenelements und/oder eines Vorgangs, hinterlegt ist.

Nach einem Betriebsfehler wird häufig nach den Ursachen des Auftretens dieses Fehlers gesucht. Hierzu werden in einem Archiv Signale und physikalische Parameter der Industrieanlage nach einer möglichen Fehlerursache durchsucht. Werden Signale von Anlagenelementen der Industrieanlage, die zu Betriebsfehler führen können, insbesondere solche, die Grenzwerten zugeordnet sind, nicht archiviert, so kann es sein, dass ein entsprechender Fehler nicht gefunden werden kann. Um dies zu vermeiden, ist es vorteilhaft, wenn die Prüfroutine das Steuerprogramm daraufhin überprüft, ob eine Archivierungsroutine des Steuerprogramms dazu vorbereitet ist, Werte von solchen Ausgabesignalen von Anlagenelementen der Industrieanlage, die Grenzwerten zugeordnet sind, zu archivieren. Die Archivierung kann permanent, regelmäßig oder in einer anderen vorbestimmten Weise geschehen.

Weiter wird vorgeschlagen, dass Regelbrüche mit Hilfe einer Reparaturroutine regelbasiert behoben und die Daten entsprechend verändert werden. Hierdurch können einfache Programmierfehler standardisiert behoben und eine Überarbeitung des Steuerprogramms kann vereinfacht werden. Zweckmäßigerweise werden die Daten von einem Steuerserver der Industrieanlage eingelesen, regelbasiert korrigiert und in korrigierter Form wieder in den Steuerserver eingespielt.

Durch eine externe Überprüfung des Steuerprogramms ist es möglich, mehrere unterschiedliche Steuerprogramme unterschiedlicher Industrieanlagen nach gleichen Regeln zu überprüfen. So wird vorteilhafterweise zuerst ein Steuerprogramm zur Steuerung einer ersten Industrieanlage und dann ein Steuerprogramm zur Steuerung einer von der ersten Industrieanlage verschiedenen zweiten Industrieanlage mit Hilfe der Prüfroutine auf die Einhaltung der gleichen festgelegten Regeln überprüft. Die verschiedenen Industrieanlagen sind hierbei auf unterschiedliche Arbeitsziele gerichtet.

Außerdem ist die Erfindung gerichtet auf eine Prüfvorrichtung zum Überprüfen eines Steuerprogramms zur Steuerung einer Industrieanlage. Es wird vorgeschlagen, dass die Prüfvorrichtung erfindungsgemäß eine Datenbank und eine Prüfroutine umfasst, die in Verbindung mit einem Prozessor gesteuerten Rechenmittel zum Überprüfen des Steuerprogramms anhand der Daten auf die Einhaltung festgelegter Regeln und zum Ausgeben von Regelbrüchen vorgesehen ist. Insbesondere umfasst die Prüfvorrichtung eine Einleseroutine zum Einlesen der Daten des Steuerprogramms. Es kann standardisiert nach Fehlern gesucht und standardisierte Protokolle mit Fehlermeldungen können als Qualitätsdokumentation bzw. Korrekturvorgabe ausgegeben werden.

Die Prüfroutine dient zweckmäßigerweise dazu, einen oder mehrere der oben genannten Verfahrensschritte auszuführen.

Die Erfindung wird anhand von Ausführungsbeispielen näher erläutert, die in den Zeichnungen dargestellt sind.

Es zeigen:
- FIG 1: eine Industrieanlage und eine Prüfvorrichtung in stark stilisierter Form,
- FIG 2: einen Ausschnitt aus einem Funktionsplan einer Industrieanlage,
- FIG 3: einen Ausschnitt aus einer tabellarischen Auflistung von aufgefundenen Unplausibilitäten in Daten, die dem Funktionsplan zugrunde liegen,
- FIG 4: ein Funktionsschema von drei Temperatursensoren und
- FIG 5-FIG 7: drei Ausschnitte von Fehlerlisten, die von einer Prüfroutine gefunden wurden.

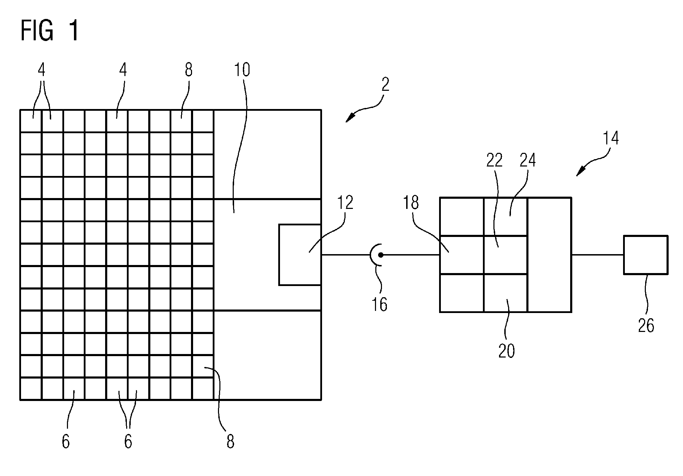

FIG 1 zeigt in einer sehr schematischen Darstellung eine Industrieanlage 2 mit einer Vielzahl von Aktuatoren 4, Sensoren 6 und weiteren Anlagenelementen 8. Die Anlagenelemente 4, 6, 8 der Industrieanlage 2 werden von einem Steuerprogramm 12, das auf einem Server 10 der Industrieanlage 2 gespeichert ist, gesteuert.

Zum Überprüfen des Steuerprogramms 12 ist eine Prüfvorrichtung 14 in Form eines tragbaren Computers über eine Schnittstelle 16 mit dem Server 10 verbunden. Mit Hilfe einer Einleseroutine 18 werden Daten des Steuerprogramms 12 in eine Datenbank 20 der Prüfvorrichtung 14 eingelesen. Diese Daten bilden einen Teil des Steuerprogramms, das beispielsweise vier größere und zur Steuerung der Industrieanlage 2 zusammenwirkende Dateien umfasst, von denen eine Datei in die Datenbank 20 eingelesen wird. Diese Datei umfasst eine Auflistung sämtlicher gesteuerter Anlagenelemente 4, 6, 8 der Industrieanlage 2, deren Ports, und deren Verbindungen zu anderen Ports sowie Bedienbilder und Bedienelemente für einen Bediener in der Leitstelle der Industrieanlage 2.

Die Industrieanlage ist in zweiundzwanzig Funktionsbereiche aufgeteilt, umfasst rund 110.000 Anlagenelemente, 1,2 Millionen Ports und rund 6 Millionen Signalverbindungen zwischen den Ports oder parametrierbare Informationen. Mit Hilfe eines Rechenmittel 22 in Form eines Prozessors und einer Prüfroutine 24 in Form eines Computerprogramms überprüft die Prüfvorrichtung 14 die in der überspielten Datei tabellarisch gelisteten Daten auf die Einhaltung festgelegter Regeln, die in der Prüfroutine 24 hinterlegt sind. Aufgefundene Regelbrüche werden tabellarisch an ein Ausgabemittel 26, beispielsweise einen Bildschirm oder einen Drucker, zur Visualisierung ausgegeben. Eine weitere Funktion der Prüfvorrichtung 14 besteht in der automatischen Korrektur der Daten und damit des Steuerprogramms 12 nach festgesetzten Regeln. Die korrigierten Daten werden über die Schnittstelle 16 an den Server 10 zurückgegeben, sodass das Steuerprogramm 12 nun modifiziert ist.

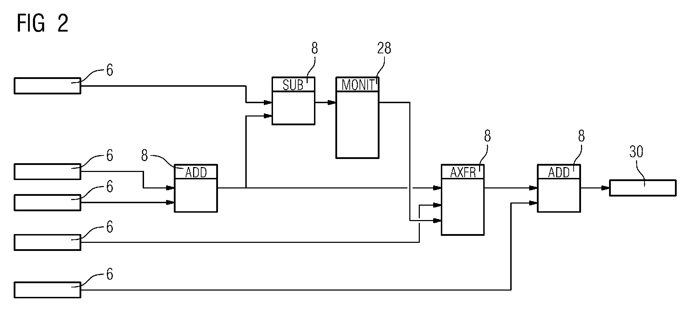

FIG 2 zeigt einen kleinen Ausschnitt aus einem Funktionsplan des einundzwanzigsten Funktionsbereichs der Industrieanlage 2, die als eine Fernwärmeanlage ausgeführt ist. Sensoren 6 der Industrieanlage erfassen Kondensatströme in einem Rohrleitungssystem der Industrieanlage 2 und senden in regelmäßigen Abständen Signale, die als Information einen Parameterwert beinhalten, beispielsweise 20 kg/sek. Diese Parameterwerte werden in logischen Anlagenelementen 8 in Form von Funktionsbausteinen nach festgelegten Regeln miteinander verknüpft, wobei ein weiteres Anlagenelement 28 die so verknüpften Parameter auf einen Grenzwert überprüft. Ein weiteres als Funktionselement ausgeführtes Anlagenelement 30 dient dem Signalaustausch mit einem anderen Abschnitt der Industrieanlage 2.

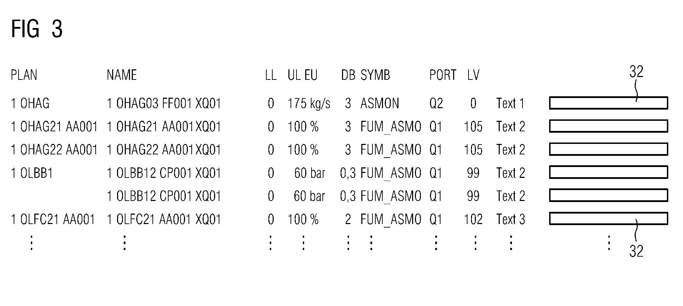

Bei der Prüfung der Daten bzw. des Steuerprogramms 12 der Industrieanlage 2 werden diese auf festgelegte Regeln überprüft. Solche Regeln sind beispielhaft anhand FIG 3 erläutert. FIG 3 zeigt eine Auflistung von auf dem Ausgabemittel 26 ausgegebenen Brüchen von festgelegten Regeln, auf die die einzelnen Daten oder Datenbereiche hin untersucht werden.

Bei den in FIG 3 exemplarisch geprüften Daten werden alle Grenzwerte überprüfenden Anlagenelemente 28 eines Funktionsbereichs oder der gesamten Industrieanlage 2 auf die Plausibilität der sie erreichenden Signale mit den gesetzten Grenzwerten überprüft. In der ersten Zeile ist ein Anlagenelement mit der Bezeichnung 1 OHAG03 FF001, das im Plan 1 OHAG des ersten Funktionsbereichs der Industrieanlage 2 zu finden ist, angegeben. Anhand der Sensoren 6 und Anlagenelemente 8 erreicht dieses Anlagenelement 28 im Betrieb ein Signal, das einen Parameterwert zwischen 0 (LL = Lower Level) und 175 kg/sek (UL = Upper Limit, EU = Einheit) erreichen kann. Die Art des Grenzwerts, die anhand eines Symbolnamens (SYMB) angegeben ist, ist mit einer Hysterese (DB) von 3 kg/sek versehen. Der Grenzwert (LV = Level Value) ist bei 0 kg/sek eingestellt.

Die in diesem Sachverhalt überprüfte Regel lautet, dass der gesetzte, also aktivierte Grenzwert schaltbar sein muss. Die Prüfroutine hier hat hierbei den Fehler gefunden, dass der betrachtete Grenzwert nicht schaltbar ist und hat diesen Fehler anhand eines ersten Texts beschrieben:

### Text 1: "Fehler: Kombination Grenzwert/Hysterese außerhalb Messbereich"

Bei diesem Sachverhalt müsste der Signalwert den Wert von -3 kg/sek unterschreiten, um den Grenzwert von 0 kg/Sek., inklusive seiner Hysterese von 3 kg/sek, zu schalten. Da ein negativer Kondensatstrom nicht möglich ist, und außerdem die Sensoren 6 einen solchen negativen Strom nicht erkennen können, ist der Grenzwert nicht schaltbar. Ein Bediener der Prüfvorrichtung 14 oder ein Programmierer des Steuerprogramms 12 oder eine andere Person kann nun anhand der Funktionspläne den aufgefundenen Fehler lokalisieren und die Daten bzw. das Steuerprogramm 12 mit einem korrigierten Grenzwert versehen. Hierdurch ist der Fehler behoben und die Industrieanlage 2 kann zuverlässiger gesteuert werden.

In der zweiten Zeile der Liste der aufgefundenen Fehler aus FIG 3 wird die Regel überprüft, ob der Grenzwert innerhalb eines möglichen Wertebereichs inklusive einer Hysterese oder Toleranz liegt. Alle Verbindungen bzw. Parametriermöglichkeiten wurden auf diesen Fehler untersucht und es wurden Fehler gefunden von denen einige exemplarisch in der zweiten bis fünften Zeile der Auflistung aus FIG 3 dargestellt sind. In der zweiten Zeile kann ein Signal ein einen Grenzwert überwachendes Anlagenelement 28 erreichen, das die Parameterwerte zwischen 0 und 100 % einnehmen kann. Ein Toleranzbereich von 3 % erlaubt dem Signal außerdem einen Parameterwert von bis zu 103 % anzunehmen. Allerdings ist der Grenzwert auf 105 % gesetzt und somit nicht schaltbar. Im zweiten Text ist daher angegeben:

### Text 2: "Fehler: Grenzwert außerhalb Messbereich und Toleranz"

In der letzten Zeile der Auflistung in FIG 3 ist ein weiterer Fehler aufgelistet, der eigentlich kein Fehler ist, sondern nur eine Auffälligkeit, jedoch als Fehler behandelt wird. Bei diesem Beispiel liegt der Grenzwert bei unter 102 % in einem möglichen Wertebereich von 0 bis 100 % mit einer Toleranz von 2 %. Der Parameterwert des Signals kann hierbei also den Grenzwert von 102 % erreichen. Der dritte Text lautet:

### Text 3: "Hinweis: Grenzwert im Toleranzbereich außerhalb Messbereich"

Ist dies tatsächlich ein Fehler, so kann er von einem Bediener behoben werden. Ist der Grenzwert allerdings korrekt auf 102 % eingestellt, so kann in einem Eingabefeld 32 ein entsprechender Kommentar eingefügt werden, beispielsweise dass der Grenzwert korrekt und gewollt ist.

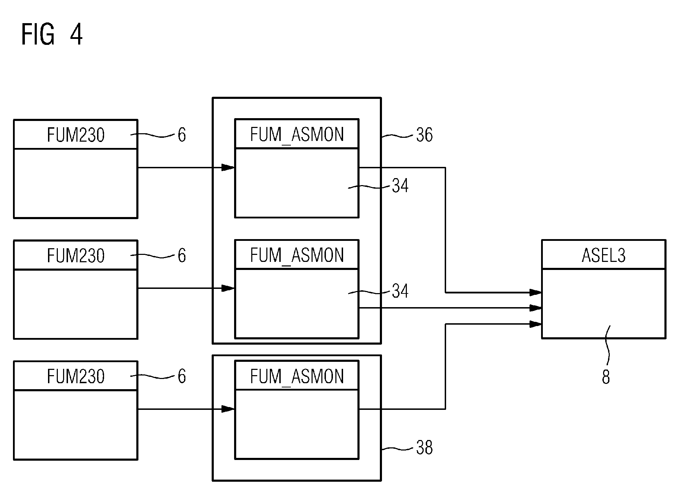

Anhand von FIG 4 wird eine weitere Regel dargestellt, auf die die Daten überprüft werden. Aus diesen Daten geht hervor, dass drei baugleiche Sensoren 6 eine physikalische Größe, beispielsweise einen Speisewasserdurchfluss, messen. Die drei Sensoren 6 messen alle die gleiche Größe und sind aus Sicherheitsgründen und aus Gründen der Verfügbarkeit zweifach redundant vorhanden. Jeder Sensor 6 ist mit einer Eingangsbaugruppe mit der Bezeichnung FUM 230 und darüber hinaus mit einem Eingangstreiber 34 verbunden, der ein logisches Signal aus dem Analogsignal des betreffenden Sensors 6 erstellt. Die drei Eingangstreiber 34 sind mit einem einzigen Anlagenelement 8 verbunden, das die Dreifachmessung auswertet und entsprechend die Signale an weitere Anlagenelemente weitergibt.

Die zu überprüfende Regel ist eine Regel zur Einhaltung der verfahrenstechnischen Redundanzen in der Leittechnik. Sie beinhaltet, dass jeder Sensor 6 und jeder Eingangstreiber 34 auf einer eigenen Baugruppe 36, 38 angeordnet sein soll, wobei jede Baugruppe 36, 38 durch eine eigene Stromversorgung mit der notwendigen Betriebsspannung versorgt werden soll. Durch die Überprüfung der Regel wird anhand der Daten festgestellt, dass die beiden im oberen Abschnitt aus FIG 4 dargestellten Eingangstreiber 34 auf einer gemeinsamen Baugruppe 36 angeordnet sind, und somit nur über eine einzige Stromversorgung verfügen. Im Falle der Unterbrechung dieser Stromversorgung fallen beide Eingangstreiber 34 gemeinsam aus. Dies widerspricht der Sicherheitsregel der getrennten Stromversorgungen. Eine entsprechende Fehlermeldung wird in einer Liste, die analog wie die Liste aus FIG 3 aufgebaut sein kann, ausgegeben.

Auf diese Weise werden Verschaltungen nach festgelegten Regeln überprüft. Es wird die Kombination von Anlagenelementen 6, 8, 34 - auch über eine Systemgrenze hinweg - geprüft, z. B. nach ihrer Anordnung innerhalb der Industrieanlage 2.

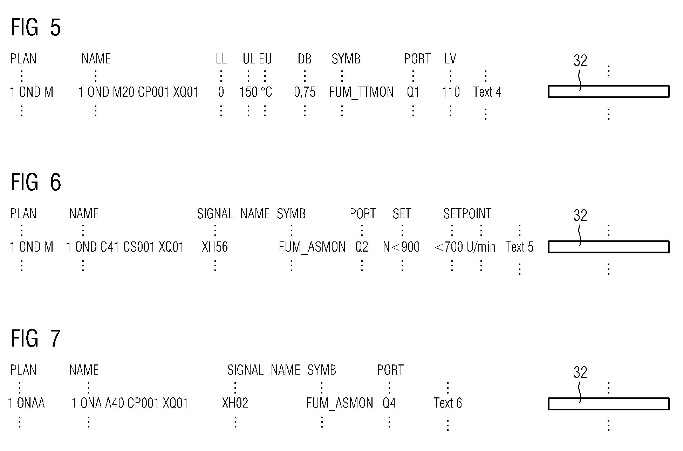

Weitere Regeln werden anhand der FIG 5 bis 7 beispielhaft erläutert. Bei der in FIG 5 nur durch eine einzige Zeile angedeuteten Auflistung von Fehlern bzw. Fehlermeldungen wurde überprüft, ob ein Grenzwert, der in seiner Werteinstellung von einem voreingestellten Wert, beispielsweise 0 oder 99, auf einen anderen Wert gesetzt wurde, aktiviert ist. So wurde beispielsweise zu dem Anlagenelement 1 OND M20 CP001 ein auf 110°C gesetzter Grenzwert gefunden, der allerdings nicht aktiviert wurde. Entsprechend lautet der vierte Text:

### Text 4: "Hinweis: Der Defaultwert wurde verändert, der Grenzwert aber nicht aktiviert."

In einer weiteren Regel kann überprüft werden, ob Grenzwerte die mit einem weiteren Anlagenelement verschaltet sind, aktiviert sind. Ist z.B. ein Grenzwert ausgebender Port Q1, Q2, ..., Qn, mit einem weiteren Port bzw. Anlagenelement der Industrieanlage 2 verschaltet und der entsprechende Grenzwert nicht aktiviert, so kann in einer Auflistung analog zu FIG 5 der entsprechende Baustein und Grenzwert dargestellt und beispielsweise mit dem Text erläutert werden:

### "Hinweis: Grenzwert ist verschaltet aber nicht aktiviert."

In einer weiteren Regel werden die Daten bzw. Sachverhalte im Steuerprogramm 12 daraufhin überprüft, ob eine dokumentarisch hinterlegte Einstellung eines Anlagenelements mit einem gesetzten Grenzwert übereinstimmt. Soll beispielsweise bei einer Drehzahl N ab 900 U/min ein Vorgang geschaltet werden, der entsprechend eingestellte Grenzwert liegt jedoch bei 700 U/min, so wird bereits bei der niedrigeren Drehzahl ein Vorgang geschaltet, der erst bei der höheren Drehzahl eintreten sollte. Ein entsprechender fünfter Text kann lauten:

### Text 5: "Hinweis: Einstellung entspricht nicht der Kombination aus Grenzwert und EU."

Bei der Regelüberprüfung, die anhand der angedeuteten Auflistung aus FIG 7 dargestellt ist, wurde geprüft, ob alle grenzwertbehafteten Signale archiviert werden. Liefert beispielsweise ein Sensor ein Signal das von einem Treiber aufgenommen wird und dieses Signal ist so verschaltet, dass es einen Grenzwert über- oder unterschreiten kann, der aktiviert ist und einen entsprechenden Steuervorgang auslöst, so wird dieses Signal überprüft, ob es einen Archiveintrag auslöst. Dieser Archiveintrag kann regelmäßig oder nach einer voreingestellten Regel erfolgen. Wird kein Archiveintrag ausgelöst, so wird eine entsprechende Fehlermeldung ausgegeben deren sechster Text lauten kann:

### Text 6: "Fehler: Grenzwert nicht im Archiv"

Eine weitere Regel, deren Überprüfung sinnvoll ist, ist die Überprüfung sämtlicher Alarme, die an einen Bediener ausgegeben werden, auf bestimmte Eigenschaften. Eine solche Eigenschaft kann sein, ob es zu diesem Alarm ein Bedienerbild im Steuerprogramm bzw. in einer Datei des Steuerprogramms gibt, das ein Bediener, z. B. einer Leitwarte der Industrieanlage 2, aufrufen kann, um den entsprechenden Alarm mit einem Anlagenelement der Industrieanlage 2 verknüpfen zu können. Ist ein Alarm einem Anlagenelement zugeordnet, das in keiner Bedienerdarstellung zu finden ist, so wird ein entsprechender Fehler bzw. Regelbruch ausgegeben analog den in FIG 5 bis 7 beschriebenen.

Eine weitere Funktion der Prüfvorrichtung 14 ist das selbständige Korrigieren von Fehlern. So kann beispielsweise das Fehlen von Archiveinträgen von Treibersignalen automatisch eliminiert werden und das Steuerprogramm 12 bzw. dessen Daten so geändert werden, dass jedes grenzwertbehaftete Signal nach voreingestellter Weise Archiveinträge auslöst. Ein solcher Fehler kann zunächst aufgelistet werden und ein Bediener kann eine entsprechende Reparaturroutine aufrufen und diesen Fehler bzw. alle gelisteten Fehler auf einmal durch einen entsprechenden Befehl beheben.

Ebenfalls möglich ist es, dass voreingestellte Fehler ohne Bedieneraufforderung nach ihrem Auffinden behoben werden. Auf diese Weise können kleinere und unkritische Fehler automatisiert behoben werden, ohne dass ein Bediener über eine Flut von Fehlern schauen und Entscheidungen zu diesen Fehlern treffen muss.

## Patentansprüche

1. Verfahren zum Überprüfen eines Steuerprogramms (12) zur Steuerung einer Industrieanlage (2), bei dem Daten des Steuerprogramms (12) in eine Datenbank (20) eingelesen werden und eine Prüfroutine (24) das Steuerprogramm (12) anhand der Daten auf die Einhaltung festgelegter Regeln überprüft und Regelbrüche ausgibt.

2. Verfahren nach Anspruch 1,
**dadurch gekennzeichnet, dass** die Daten von einem Steuerserver (10) der Industrieanlage (2) in eine von der Industrieanlage (2) unabhängige Prüfvorrichtung (14) mit der Prüfroutine (24) eingelesen werden.

3. Verfahren nach Anspruch 1 oder 2,
**dadurch gekennzeichnet, dass** die Prüfroutine (24) das Steuerprogramm (12) auf korrekte Parametrierung und/oder Verschaltungen von Anlagenelementen (4, 6, 8) der Industrieanlage (2) prüft.

4. Verfahren nach einem der vorhergehenden Ansprüche,
**dadurch gekennzeichnet, dass** die Regeln Plausibilitätsregeln sind und Regelbrüche Unplausibilitäten.

5. Verfahren nach einem der vorhergehenden Ansprüche,
**dadurch gekennzeichnet, dass** die Prüfroutine (24) prüft, ob zu Anlagenelementen (4, 6, 8) der Industrieanlage (2) gesetzte Werte hinsichtlich Anlagenelementdaten plausibel sind.

6. Verfahren nach einem der vorhergehenden Ansprüche,
**dadurch gekennzeichnet, dass** die Prüfroutine (24) Wertebereiche von Ausgabesignalen von Anlagenelementen (4, 6, 8) der Industrieanlage (2) mit Grenzwerten, die diesen Ausgabesignalen zugeordnet sind, vergleicht.

7. Verfahren nach einem der vorhergehenden Ansprüche,
**dadurch gekennzeichnet, dass** die Prüfroutine (24) mehrere gleiche Signal gebende Anlagenelemente (4, 6, 8) der Industrieanlage (2) daraufhin überprüft, ob sie hinsichtlich einer festgelegten Eigenschaft ausreichend voneinander getrennt sind.

8. Verfahren nach einem der vorhergehenden Ansprüche,
**dadurch gekennzeichnet, dass** die Prüfroutine (24) Grenzwerte zu Signalausgängen von Anlagenelementen (4, 6, 8) der Industrieanlage (2), die mit einem Signaleingang eines anderen Anlagenelements(4, 6, 8) der Industrieanlage (2) verbunden sind, daraufhin überprüft, ob die Grenzwerte aktiviert sind.

9. Verfahren nach einem der vorhergehenden Ansprüche,
**dadurch gekennzeichnet, dass** die Prüfroutine (24) Grenzwerte zu Signalausgängen von Anlagenelementen (4, 6, 8) der Industrieanlage (2) die von einem voreingestellten Wert auf einen anderen Wert gesetzt wurden, daraufhin überprüft, ob die Grenzwerte aktiviert sind.

10. Verfahren nach einem der vorhergehenden Ansprüche,
**dadurch gekennzeichnet, dass** die Prüfroutine (24) dokumentarisch hinterlegte Angaben zu Ausgabesignalen von Anlagenelementen (4, 6, 8) der Industrieanlage mit Grenzwerten, die diesen Ausgabesignalen zugeordnet sind, vergleicht.

11. Verfahren nach einem der vorhergehenden Ansprüche,
**dadurch gekennzeichnet, dass** die Prüfroutine (24) Fehlermeldungen zu Betriebsfehlern der Industrieanlage (2), die vom Steuerprogramm (12) zur Ausgabe an einen Bediener vorgesehen sind, daraufhin überprüft, ob im Steuerprogramm (12) zu Fehlermeldung ein Bedienbild zur Visualisierung einer Lokalisierung des Fehlers hinterlegt ist.

12. Verfahren nach einem der vorhergehenden Ansprüche,
**dadurch gekennzeichnet, dass** das Steuerprogramm (12) durch die Prüfroutine (24) daraufhin überprüft wird, ob eine Archivierungsroutine des Steuerprogramms (12) dazu vorbereitet ist, Werte von solchen Ausgabesignalen von Anlagenelementen (4, 6, 8) der Industrieanlage (2), die Grenzwerten zugeordnet sind, zu archivieren.

13. Verfahren nach einem der vorhergehenden Ansprüche,
**dadurch gekennzeichnet, dass** Regelbrüche mit Hilfe der Prüfroutine (24) regelbasiert behoben und die Daten entsprechend verändert werden.

14. Verfahren nach einem der vorhergehenden Ansprüche,
**dadurch gekennzeichnet, dass** zuerst ein Steuerprogramm (12) zur Steuerung einer ersten Industrieanlage (2) und dann ein Steuerprogramm (12) zur Steuerung einer von der ersten Industrieanlage (2) verschiedenen zweiten Industrieanlage mit Hilfe der Prüfroutine (24) auf die Einhaltung der gleichen festgelegten Regeln überprüft werden.

15. Prüfvorrichtung (14) zum Überprüfen eines Steuerprogramms (12) zur Steuerung einer Industrieanlage (2), mit einer Datenbank (20), einer Einleseroutine (18) zum Einlesen von Daten des Steuerprogramms (12) in die Datenbank (20) und einer Prüfroutine (24), die in Verbindung mit einem prozessorgesteuerten Rechenmittel (22) zum Überprüfen des Steuerprogramms (12) anhand der Daten auf die Einhaltung festgelegter Regeln und zum Ausgeben von Regelbrüchen vorgesehen ist.
